# EUROPÄISCHE PATENTANMELDUNG

(11) **EP 1 025 979 A2**
(43) Veröffentlichungstag der Anmeldung: **09.08.2000**
(21) Anmeldenummer: 00100524.8
(22) Anmeldetag: 12.01.2000
(51) Int. Cl.: B29C 55/28

(54) **Verfahren zur Regelung des Durchmessers einer zwischen einem Vorzugsrollenpaar und einem Abzugsrollenpaar zu einer Schlauchfolienblase mit vertikaler Mittellinie aufgeblasenen Schlauchfolienbahn**

(30) Priorität: 04.02.1999 DE 19904529
(71) Anmelder: Windmöller & Hölscher, D-49525 Lengerich (DE)
(72) Erfinder: Barth, Udo, 49545 Tecklenburg (DE)

(57) **Zusammenfassung**

Zur erneuten Verstreckung wird eine Schlauchfolienbahn zwischen einem Vorzugsrollenpaar und einem Abzugsrollenpaar zu einer Schlauchfolienblase aufgeblasen, nachdem die Schlauchfolienbahn im Bereich des Einlaufs in die Schlauchfolienblase erwärmt worden ist. Um den Gasdruck in der Schlauchfolienblase konstant oder auf einen solchen Wert zu halten, daß die auf der Schlauchfolienblase abgezogene Schlauchfolienbahn eine der Soll-Breite entsprechende Breite aufweist, ohne daß durch Injektionen ständig Blasluft nachgefüllt werden muß, wird in den Folienschlauch Wasser oder eine Flüssigkeit mit anderem Siedepunkt eingefüllt, die sich oberhalb des Vorzugsrollenpaares sammelt. Die Flüssigkeit wird so lange bis über ihren Siedepunkt erwärmt, bis sich der erforderliche Druck der Schlauchfolienblase einstellt.

## Beschreibung

Die Erfindung betrifft ein Verfahren zur Regelung des Durchmessers einer zwischen einem Vorzugsrollenpaar und einem Abzugsrollenpaar zu einer Schlauchfolienblase mit vertikaler Mittellinie aufgeblasenen Schlauchfolienbahn, bei dem die Schlauchfolienbahn kontinuierlich aus der Schlauchfolienblase durch das Abzugsrollenpaar abgezogen und durch zwei keilförmig zueinander angeordnete Flachlegeeinrichtungen, die sich in Richtung auf den Einzugsspalt des Abzugswalzenpaares verengen, flachgelegt wird und bei dem die Schlauchfolienbahn im Bereich des Einlaufs der Schlauchfolienblase erwärmt wird.

Es gibt Fälle, in denen eine im Schlauchfolienblasverfahren hergestellte und zu einer Rolle aufgewickelte Kunststoffschlauchfolienbahn zur Erreichung anderer Eigenschaften oder verbesserter Festigkeitswerte nochmals durch Aufblasen zu einer Schlauchfolienblase und Erwärmen verstreckt wird. Das Erwärmen erfolgt dabei auf Temperaturen, die zur Erreichung der gewünschten veränderten Folieneigenschaften erforderlich sind. Vorzugsweise erfolgt die Erwärmung der aufgeblasenen Schlauchfolienbahn im Bereich ihres Einlaufs in die Schlauchfolienblase etwa bis auf ihre Warmumformbarkeitstemperatur (Glasübergangstemperatur). Das Aufblasen der von dem Vorzugsrollenpaar eingezogenen Schlauchfolienbahn erfolgt durch Injektionsnadeln, wobei zur Aufrechterhaltung des Luftdrucks in der Schlauchfolienblase die Injektionsnadeln mitlaufend oder rotierend angeordnet sein können.

Bei dem Aufblasen und Verstrecken der Schlauchfolienbahn in einer Schlauchfolienblase läßt es sich nicht verhindern, daß ständig mit der aus der Schlauchfolienblase abgezogenen und flachgelegten Schlauchfolienbahn durch das Abzugswalzenpaar hindurch Luft mitgeschleppt wird, so daß sich in der Schlauchfolienblase das Luftvolumen ändert und bei sich verringerndem Luftvolumen auch die Schlauchfolienbahn in der Schlauchfolienblase geringer ausgereckt wird, so daß sich der Durchmesser der Schlauchfolienblase oder die Breite der flachgelegten und aus der Schlauchfolienblase abgezogenen Schlauchfolienbahn verringert. Diese Verringerung des Luftvolumens kann durch ständige Zuführung von Blasluft durch Injektionsnadeln ausgeglichen werden, was jedoch mit einer Perforation der Schlauchfolienblase verbunden ist, die grundsätzlich unerwünscht ist.

Aufgabe der Erfindung ist es, ein Verfahren vorzuschlagen, bei dem sich der Gasdruck in der Schlauchfolienblase konstant oder auf einen solchen Wert halten läßt, daß die aus der Schlauchfolienblase abgezogene Schlauchfolienbahn eine der Soll-Breite entsprechende Breite aufweist, ohne daß durch Injektionen ständig Blasluft nachgefüllt werden muß.

Erfindungsgemäß wird diese Aufgabe bei einem Verfahren der eingangs angegebenen Art dadurch gelöst, daß in den Folienschlauch Wasser oder eine Flüssigkeit mit anderem Siedepunkt eingefüllt wird, die sich oberhalb des Vorzugsrollenpaares sammelt, und daß die Flüssigkeit solange bis über ihren Siedepunkt erwärmt wird, bis ein vorbestimmter Druck in der Schlauchfolienblase eingestellt ist.

Nach dem erfindungsgemäßen Verfahren ist es somit nicht mehr notwendig, in den aufgeblasenen Folienschlauch bzw. die Schlauchfolienblase durch Injektionen Druckluft nachzufüllen. Ein sich in der Schlauchfolienblase einstellender Druckverlust wird erfindungsgemäß durch den Dampfdruck der in dem aufgeblasenen Folienschlauch befindlichen Flüssigkeit ausgeglichen. Die Flüssigkeit läßt sich nach Bedarf durch die Folienwand hindurch mit Strahlungsenergie auf über den Siedepunkt liegende Temperaturen erwärmen, so daß ein Absinken des Luftdrucks durch den Dampfdruck der Flüssigkeit ausgeglichen wird.

Als Flüssigkeit bietet sich in erster Linie Wasser an. Eine Behandlung der Schlauchfolieninnenwandung mit Wasser bzw. Wasserdampf ist insbesondere dann zweckmäßig, wenn die Schlauchfolie oder zumindest die Innenwandung aus einem Polyamid besteht. Denn aus Polyamid bestehende Folien werden durch eine Behandlung mit Wasser bzw. Wasserdampf in ihrer Qualität verbessert und weitgehend dampfdicht gemacht, so daß sich derartige Folien insbesondere zur Verpackung von Lebensmitteln eignen.

Statt Wasser können auch Flüssigkeiten mit niedrigem Siedepunkt und vorzugsweise mit einem niedrigeren Siedepunkt als Wasser verwendet werden.

Der sich oberhalb des Vorzugsrollenpaares in dem aufgeblasenen Folienschlauch sammelnden Flüssigkeit kann Strahlungsenergie beispielsweise durch einen Infrarotstrahler zugeführt werden.

Besonders zweckmäßig ist es jedoch, der Flüssigkeit Wärme durch Mikrowellen zuzuführen, wie sie in Mikrowellenerwärmungsgeräten zur Anwendung kommen.

Nach einer bevorzugten Ausführungsform ist vorgesehen, daß der Durchmesser der Schlauchfolienblase oder die Breite des aus der Schlauchfolienblase abgezogenen flachgelegten Schlauches gemessen und entsprechend der gemessenen Abweichung des Durchmessers von dem Soll-Durchmesser der Schlauchfolienblase oder der Breite von der Soll-Breite der Flüssigkeit Wärme durch Strahlungsenergie zugeführt wird. Auf diese Weise läßt sich die Breite der flachgelegten Schlauchfolienbahn automatisch regeln.

Eine Vorrichtung zur Durchführung des erfindungsgemäßen Verfahrens mit einem in einem Gestell gelagerten angetriebenen Vorzugsrollenpaar für eine flachliegende Schlauchfolienbahn, mit einem gegenüberliegenden, ortsfest gelagerten angetriebenen Abzugsrollenpaar für die aus der aufgeblasenen Schlauchfolienblase abgezogene flachgelegte Schlauchfolienbahn, dem Flachlegeeinrichtungen, beispielsweise keilförmig zueinander angeordnete Flachlegeplatten, vorgeschaltet sind, mit Einrichtungen zum Aufblasen der Schlauchfolienbahn zwischen den Vor- und Abzugsrollenpaaren zu einer Schlauchfolienblase, mit Einrichtungen zum Erwärmen der aufgeblasenen Schlauchfolienbahn und mit Einrichtungen zum Messen des Durchmessers der Schlauchblase oder der Breite der flachgelegten, aus der Schlauchblase abgezogenen Schlauchfolienbahn zeichnet sich erfindungsgemäß dadurch aus, daß oberhalb des Vorzugsrollenpaares eine Strahlungseinrichtung angeordnet ist, die eine in dem aufgeblasenen Folienschlauch befindliche Flüssigkeit erwärmt, und daß eine Steuereinrichtung vorgesehen ist, die entsprechend der Abweichung des gemessenen Durchmessers von dem Durchmesser der Schlauchfolienblase oder der gemessenen Breite von der Soll-Breite der flachgelegten Schlauchfolienbahn der Strahlungseinrichtung Energie zuführt.

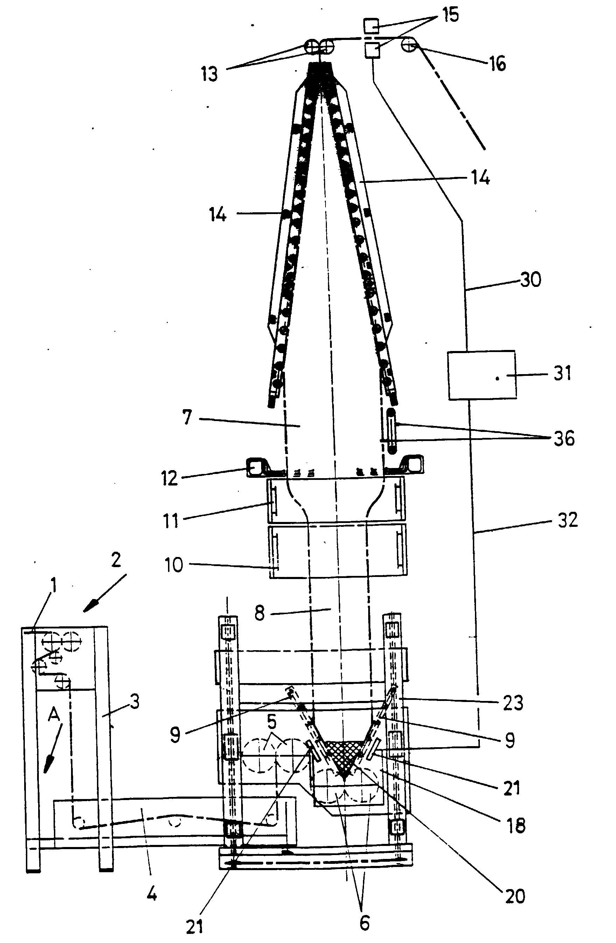

Ein Ausführungsbeispiel der Erfindung wird nachstehend anhand der Zeichnung näher erläutert, in deren einziger Figur eine Seitenansicht der erfindungsgemäßen Vorrichtung schematisch dargestellt ist.

Von einer nicht dargestellten, in einer Abrolleinrichtung gelagerten Vorratsrolle wird eine flachliegende Kunststoffschlauchfolienbahn 1 in Richtung des Pfeils A von einem Vorzugsrollenpaar und nachgeschalteten Umlenkrollen 2, die in einem Ständer 3 gelagert sind, abgezogen. Die Schlauchfolienbahn wird durch Umlenkrollen durch ein beheiztes Wasserbad 4 geleitet, in dem eine Vorwärmung der Schlauchfolienbahn 1 stattfindet. Über Vorzugsrollen bzw. Vorzugsrollenpaare 5, 6, deren Rollen oder Walzen erwärmt sein können, wird die Schlauchfolienbahn 1 vorgezogen. Um einen guten Einlauf der Schlauchfolienbahn 1 in die Schlauchfolienblase 7 bzw. dem dieser vorgeschalteten aufgeblasenen Schlauchabschnitt 8 zu gewährleisten, sind hinter dem Auslaufspalt des Vorzugsrollenpaares 6 keilförmig Leitplatten 9 angeordnet, die ebenfalls mit Röllchen oder reibungsverminderndem Material versehen sein können. Die sich keilförmig erweiternden Leitplatten 9 führen zu einem sanftem Übergang der vorgezogenen flachliegenden Bahn zu dem aufgeblasenen Folienschlauch 8.

In den unteren Bereich des aufgeblasenen Schlauchabschnitts 8 wird durch Injektionsnadeln eine Flüssigkeit 20 eingefüllt, die seitlich durch die Leitplatten 9 abgestützt wird, so daß sie sich in dem unteren keilförmigen Bereich des aufgeblasenen Schlauchabschnitts 8 sammelt.

Eine andere Möglichkeit, eine Flüssigkeit in den Schlauchabschnitt einzufüllen, besteht darin, eine flachliegende Folienbahn durch Vorzugsrollen zu ziehe, diese von Hand ein wenig vorzuöffnen und Wasser hineinzuschütten, die Folienbahn dann weiter zu einem Abquetschwalzenpaar zu führen und im Anschluß daran das in dem Schlauchabschnitt befindliche Wasser zu verdampfen, so daß dadurch der Schlauch aufgeblasen wird.

Im ausreichenden Abstand oberhalb des Vorzugsrollenpaares 6 bzw. der Leitplatten 9 sind ortsfest zwei Heizringe 10, 11 angeordnet, die aus Infrarotheizringen bestehen können. Der untere Heizring strahlt gleichmäßig Wärme auf den diesen durchwandernden aufgeblasenen Folienschlauch 8 ab. Der Heizring 11 ist in Umfangsrichtung in Heizsektoren unterteilt, die getrennt regelbar sind, so daß sie den durchlaufenden Folienschlauch über den Umfang unterschiedlich zu erwärmen vermögen, falls dies zum Ausgleich unterschiedlicher Wanddicken erforderlich sein sollte. Die unterschiedliche Erwärmung eines Folienschlauches über seinen Umfang zum Ausgleich von Dickenschwankungen ist bekannt und braucht daher hier nicht näher beschrieben zu werden. Oberhalb des sektoriell regelbaren Heizringes 11 ist ein üblicher Kühlring 12 angeordnet, aus dessen der Schlauchfolienblase 7 zugewandten ringförmigen Austrittsschlitz Kühlluft auf die Folienblase 7 geblasen wird. Der zu einer Folienblase 7 aufgeblasene Folienschlauch wird durch ein Abzugsrollenpaar 13, das senkrecht über dem Vorzugsrollenpaar 6 ortsfest beispielsweise an der Decke einer Fabrikationshalle angeordnet ist, abgezogen. Dem Abzugsrollenpaar 13 sind keilförmig zueinander angeordnete plattenförmige Flachlegeeinrichtungen 14 vorgeschaltet, die sich in Richtung auf den Einzugsspalt des Abzugswalzenpaares 13 hin verengen. Die plattenförmigen Flachlegeeinrichtungen 14 sind in nicht dargestellter Weise ortsfest gelagert bzw. gehaltert.

Die durch das Abzugswalzen- bzw. Rollenpaar 13 flachgelegte Schlauchfolienbahn durchläuft eine Breitenmeßeinrichtung 15, die die Breite der aus der Folienblase 7 abgezogenen flachgelegten Schlauchfolienbahn mißt. Über Umlenkrollen 16 wird die wieder flachgelegte Schlauchfolienbahn einer nicht dargestellten Aufrolleinrichtung oder weiterverarbeitenden Einrichtungen zugeführt.

In den Leitplatten 9 oder in Fenstern der Leitplatten 9 sind Mikrowellen abstrahlende Einrichtungen 21 angeordnet, die an den Leitplatten 9 oder in nicht dargestellter Weise an Halteeinrichtungen des Gestells 23 befestigt sein können.

Die Breitenmeßeinrichtung 15 führt ihre Meßsignale über eine Leitung 30 der aus einem Rechner bestehenden Steuer- und Regeleinheit 31 zu, die die gemessene Ist-Breite der flachgelegten Schlauchfolienbahn mit der eingespeicherten Soll-Breite vergleicht und entsprechend der Abweichung der Ist-Breite von der Soll-Breite Steuersignale erzeugt und über die Leitung 32 den Mikrowelleneinrichtungen 21 Energie zuführt.

Der Schlauchfolienblase 7 kann nach Bedarf über mitlaufende Injektionsnadeln 36, die die Wand der Schlauchfolienblase durchdringen, Blasluft zugeführt werden. Die Zuführung von Blasluft in die Folienblase 7 durch über eine gewisse Strecke mitlaufende Injektionsnadeln, die zu Beginn der Strecke eingestochen und am Ende der Strecke wieder herausgezogen werden, ist bekannt und braucht daher hier nicht näher beschrieben zu werden.

## Patentansprüche

1. Verfahren zur Regelung des Durchmessers einer zwischen einem Vorzugsrollenpaar (6) und einem Abzugsrollenpaar (13) zu einer Schlauchfolienblase (7) mit vertikaler Mittellinie aufgeblasenen Schlauchfolienbahn (1, 8), bei dem die Schlauchfolienbahn kontinuierlich aus der Schlauchfolienblase (7) durch das Abzugsrollenpaar (13) abgezogen und durch zwei keilförmig zueinander angeordnete Flachlegeeinrichtungen (14), die sich in Richtung auf den Einzugsspalt des Abzugswalzenpaares (13) hin verengen, flachgelegt wird, und bei dem die Schlauchfolienbahn (8) im Bereich des Einlaufs in die Schlauchfolienblase (7) erwärmt und der Luft- oder Gasdruck in der Schlauchfolienblase (7) im wesentlichen konstant gehalten wird,
dadurch gekennzeichnet,
daß in den Folienschlauch (8) Wasser (20) oder eine Flüssigkeit mit anderem Siedepunkt eingefüllt wird, die sich oberhalb des Vorzugsrollenpaares (6) sammelt, und daß die Flüssigkeit (20) solange bis über ihren Siedepunkt erwärmt wird, bis ein vorbestimmter Druck in der Schlauchfolienblase (7) eingestellt ist.

2. Verfahren nach Anspruch 1, dadurch gekennzeichnet, daß der Durchmesser der Schlauchfolienblase (7) oder die Breite des aus der Schlauchfolienblase abgezogenen flachgelegten Schlauches gemessen und entsprechend der gemessenen Abweichung des Durchmessers von dem Soll-Durchmesser der Schlauchfolienblase oder der Breite von der Soll-Breite der Flüssigkeit (20) zu ihrer Erwärmung Strahlungsenergie zugeführt wird.

3. Verfahren nach Anspruch 1 oder 2, dadurch gekennzeichnet, daß der Flüssigkeit Wärme durch Mikrowellen zugeführt wird.

4. Vorrichtung zur Durchführung des Verfahrens nach Anspruch 1
mit einem in einem Gestell (23) gelagerten, angetriebenen Vorzugsrollenpaar (6) für eine flachliegende Schlauchfolienbahn (1),
mit einem gegenüberliegenden, ortsfest gelagerten, angetriebenen Abzugsrollenpaar (13) für die aus der aufgeblasenen Schlauchfolienblase (7) abgezogene flachgelegte Schlauchfolienbahn, dem Flachlegeeinrichtungen, vorzugsweise keilförmig zueinander angeordnete Flachlegeplatten (14), vorgeschaltet sind,
mit Einrichtungen (36) zum Aufblasen der Schlauchfolienbahn zwischen dem Vor- und Abzugsrollenpaaren (6, 13) zu einer Schlauchfolienblase (7),
mit Einrichtungen (10, 11) zum Erwärmen der aufgeblasenen Schlauchfolienbahn (8) und
mit Einrichtungen (15) zum Messen des Durchmessers der Schlauchblase oder der Breite der flachgelegten, aus der Schlauchblase (7) abgezogenen Schlauchfolienbahn,
dadurch gekennzeichnet,
daß oberhalb des Vorzugsrollenpaares (6) eine Strahlungseinrichtung (21) angeordnet ist, die eine in dem aufgeblasenen Folienschlauch (8) befindliche Flüssigkeit (20) erwärmt, und daß eine Steuer- und Regeleinrichtung (31) vorgesehen ist, die entsprechend der Abweichung des gemessenen Durchmessers von dem Durchmesser der Schlauchfolienblase (7) oder der gemessenen Breite von der Soll-Breite der flachgelegten Schlauchfolienbahn der Strahlungseinrichtung (21) Energie zuführt.
